# EUROPÄISCHE PATENTANMELDUNG

(11) **EP 0 921 106 A1**
(43) Veröffentlichungstag der Anmeldung: **09.06.1999**
(21) Anmeldenummer: 97121602.3
(22) Anmeldetag: 05.12.1997
(51) Int. Cl.: C04B 28/00, C04B 28/26

(54) **Baustoffmischung mit einer Alkalisilikat-Bindemittelkomponente und einer Pulverkomponente zum Beschichten und Verfugen**

(71) Anmelder: CRC CHEMICAL RESEARCH COMPANY LTD., Castleblayney (IE)
(72) Erfinder:
(74) Vertreter: Schmidt, Frank-Michael, Dr.-Ing.

(57) **Zusammenfassung**

Die Baustoffmischung besteht aus einer Alkalisilicat-Bindemittelkomponente (vorzugsweise Kaliwasserglas) und einer mit dieser unter Anwesenheit von Wasser abbindenden Pulverkomponente. Die Pulverkomponente enthält eine Mischung aus einer aktivierten Siliziumdioxidkomponente und einer aktivierten Aluminiumoxykomponente. Die Baustoffmischung enthält höchstens 3 Gew.-% Kalziumoxidverbindungen. Die Aluminiumoxykomponente umfaßt ein Aluminiumoxid, ein Aluminiumhydroxid und/oder ein Aluminiumsilicat. Vorzugsweise enthält die Aluminiumoxykomponente ein calciniertes Bauxit oder Hydrargillit. Die Siliziumdioxidkomponente enthält eine pyrogene Kieselsäure, eine Fällungskieselsäure und/oder Silicastaub. Die Pulverkomponente enthält vorzugsweise 20 bis 40 Gew.-% der Aluminiumoxykomponente und 4 bis 8 Gew.-% der Siliziumdioxidkomponente sowie eine inerte Füllkomponente. Die Baustoffmischung hat eine ausgezeichnete chemische Beständigkeit in saurem und alkalischem Millieu und eine hohe mechanische Festigkeit. Sie ist feuerbeständig und härtet rißfrei aus. Es wird eine gute Haftung auch auf feuchten Untergründen erzielt. Die Baustoffmischung kann durch Pigmente eingefärbt werden und ist vielseitig für Beschichtungen und Verfugungen einsetzbar.

## Beschreibung

Die Erfindung betrifft eine Baustoffmischung mit einer Alkalisilicat-Bindemittelkomponente und einer mit dieser unter Anwesenheit von Wasser abbindenden Pulverkomponente. Ferner betrifft die Erfindung ein Verfahren zur Beschichtung eines mineralischen und/oder metallischen Untergrunds unter Verwendung einer solchen Baustoffmischung bzw. die Verwendung einer solchen Baustoffmischung als Fugenmasse oder Fugenfüller.

Die EP 0 512 269 B1 beschreibt ein Verfahren zur großflächigen Beschichtung mineralischer und/oder metallischer Untergründe sowie ein Baustoffgemisch aus einer wäßrigen Alkalisilicatlösung und einer Pulverkomponente. Die Pulverkomponente stellt eine Mischung mehrerer pulverformiger Stoffe dar. Die pulverförmigen Stoffe umfassen einerseits pyrogene oder gefällte Kieselsäure, also ein aktiviertes Siliciumdioxid. Andererseits enthält die Pulverkomponente puzzolane bzw. latent hydraulische Stoffe, wie beispielsweise Flug- bzw. Elektrofilterasche, Trass, gebrannten Ölschiefer, gemahlenen Hüttensand oder gemahlene Hochofenschlacke. Im Unterschied zu hydraulischen Stoffen, die mit Wasser durch Hydratation erstarren bzw. erhärten (beispielsweise Portlandzementklinker) versteht man unter einem latent hydraulischen Stoff einen solchen, der erst bei geeigneter Anregung durch einen weiteren Stoff hydraulische Eigenschaften aufweist. Ein puzzolaner Stoff erhärtet ebenfalls bei Anwesenheit von Wasser nicht selbständig, sondern erst bei Anwesenheit von alkalischen oder erdalkalischen Lösungen, beispielsweise Kalziumhydroxid (vergl. DIN 1164 - 1).

Die in der genannten Europäischen Patentschrift beschriebene Baustoffmischung eignet sich für eine großflächige Beschichtung von unterschiedlichsten Untergründen insbesondere für Bauzwecke. Sie hat den Vorteil ausgezeichneter chemischer Beständigkeit in saurem und alkalischem Milieu und hoher mechanischer Festigkeit. Sie ist feuerbeständig und härtet rißfrei aus. Es wird auch eine gute Haftung auf feuchten Untergründen erzielt. Aufgrund der bei der bekannten Mischung verwendeten Komponenten hat die Mischung eine relativ starke Eigenfärbung.

Aufgabe der Erfindung ist es, eine alternative Baustoffmischung zur Verfügung zu stellen, die sämtliche obengenannten positiven Eigenschaften der bekannten Mischung aufweist und deren Färbung darüber hinaus einstellbar ist.

Diese Aufgabe wird erfindungsgemäß durch eine Baustoffmischung mit den Merkmalen des Patentanspruchs 1 gelöst.

Es wurde überraschenderweise festgestellt, daß die in der bekannten Baustoffmischung verwendeten puzzolanen oder latent hydraulischen Stoffe Flugasche, Trass, gebrannter Ölschiefer und gemahlener Hüttensand durch eine aktivierte Aluminiumoxykomponente ersetzt werden können. Unter einer aktivierten Aluminiumoxykomponente soll eine pulverförmige Komponente verstanden werden, die im wesentlichen aus aktivierten Aluminium-Sauerstoff-Verbindungen besteht. Bei den Aluminium-Sauerstoff-Verbindungen handelt es sich vorzugsweise um Aluminiumoxide, Aluminiumhydroxide und Aluminiumsilicate bzw. Mischungen dieser Stoffe. Unter Aktivierung wird ein Prozeß verstanden, durch den die Stoffe in einen reaktionsfähigeren, "aktivierten" Zustand versetzt werden, beispielsweise Wärmebehandlung oder Zermahlen.

Die Baustoffmischung kann zur Beschichtung eines mineralischen und/oder metallischen Untergrunds verwendet werden. Darüber hinaus eignet sich die Baustoffmischung zur Verwendung in einer Fugenmasse oder einem Fugenfüller. Die damit hergestellten Beschichtungen bzw. Verfugungen weisen eine ausgezeichnete chemische Beständigkeit gegenüber sauren und alkalischen Lösungen, eine hohe mechanische Festigkeit, Rißfreiheit sowie Feuerbeständigkeit auf.

Es wurde andererseits gefunden, daß Beimengungen von über 3 Gew.-% Kalziumoxidverbindungen die Säurebeständigkeit zunichte machen. Hierbei schließt der Begriff Kalziumoxid nicht nur Kalziumoxid in freier Form sondern auch solche Kalziumoxid-Verbindungen ein, in denen das Kalziumoxid chemisch aktiv ist, beispielsweise Kalziumhydroxide, Kalziumaluminate, Portlandzementklinker.

Die wenigstens eine Aluminiumoxykomponente kann Aluminiumsilicate, wie beispielsweise Andalusit, Sillimanit, Cyanit und Mullit, oder Alumosilicate, beispielsweise die zu den Phyllosilicaten zählenden Glimmer enthalten.

Vorzugsweise umfaßt die wenigstens eine aktivierte Aluminiumoxykomponente wenigstens 60 Gew.-% Aluminiumoxide und/oder Aluminiumhydroxide. Die aktivierten (beispielsweise mikrokristallinen oder amorphen) Aluminiumoxide umfassen sowohl reine Aluminiumoxide, wie beispielsweise Korund, als auch bestimmte Mischoxide, wie beispielsweise Spinell (MgO · Al₂O₃). Die aktivierten Aluminiumhydroxide können beispielsweise die Mineralien Hydrargillit, Gibbsit, Böhmit, Diaspor, Alumogel oder Sporogillit umfassen; auch können sogenannte Aktivtonerden, Bauxit oder Laterit verwendet werden.

Eine bevorzugte Ausführungsform der Baustoffmischung ist dadurch gekennzeichnet, daß die aktivierte Aluminiumoxykomponente ein calciniertes Bauxit oder Hydrargillit ist. Als "calciniertes Bauxit" wird ein Zwischenprodukt bei er Aluminiumherstellung nach dem Bayer-Verfahren bezeichnet, wobei es sich im wesentlichen um calciniertes Hydrargillit handelt. Es entsteht aus einer Lösung von mit Natronlauge aufgeschlossenem Bauxit, nachdem der Rotschlamm abgetrennt wurde. Aus der Lösung wird Hydrargillit abgeschieden, welches bei 1200-1800°C entwässert (calciniert) wird.

Bei der aus der EP 0 512 269 B1 bekannten Beschichtung wurde beispielsweise Flugasche als puzzolane Beimischung verwendet, die als industrielles Nebenprodukt im Kraftwerksbetrieb anfällt. Die Qualität, d.h. die Zusammensetzung der Flugaschen ist verhältnismäßig starken Schwankungen unterworfen. Demgegenüber bietet die Verwendung calcinierten Bauxits bei der erfindungsgemäßen Baustoffmischung den Vorteil einer relativ gleichmäßigen Qualität. Außerdem führt die Verwendung von calciniertem Bauxit zu sehr raumbeständigen Baustoffen. Ein großer Vorteil ist darüber hinaus die geringe Eigenfärbung der Pulverkomponente, welche weiße oder farbig pigmentierte Beschichtungen und die Verwendung als farbige Fugenmasse gestattet.

Als aktivierte Siliciumdioxidkomponente wird vorzugsweise eine pyrogene Kieselsäure, eine Fällungskieselsäure und/oder Silicastaub verwendet. Eine pyrogene Kieselsäure ist eine hochdisperse Kieselsäure, die durch Flammenhydrolyse entsteht. Fällungskieselsäure wird aus einer wäßrigen Alkalisilicatlösung durch Fällung mit Mineralsäuren hergestellt. Silicastaub ist ein feinkörniges, weitgehend amorphes Nebenprodukt bei der Herstellung von Silicium oder Siliciumlegierungen. Diese Kieselsäuren (SiO₂ · nH₂O) besitzen eine große Oberfläche bzw. spezielle Oberflächenbeschaffenheit der Mikropartikel, wodurch sie aktiviert sind.

Bei einer bevorzugten Ausführungsform der Baustoff-mischung enthält die Pulverkomponente 5 bis 97 Gew.-%, vorzugweise 20 bis 50 Gew.-% der Aluminiumoxykomponente und 2 bis 15 Gew.-%, vorzugsweise 4 bis 8 Gew.-% der Siliciumoxidkomponente. Bei Verwendung calcinierten Bauxits oder Hydrargillits ist dieser in einem Anteil von 5 bis 97 Gew.-%, vorzugsweise 20 bis 40 Gew.-% in der Pulverkomponente enthalten.

Neben der Siliciumdioxidkomponente und der Aluminiumoxykomponente enthält die Pulverkomponente vorzugsweise eine inerte Füllkomponente und gegebenenfalls weitere Zusatzstoffe. Die inerte Füllkomponente kann bis zu einem Anteil von 70 Gew.-% enthalten sein. Als inerte Füllkomponente wird vorzugsweise Quarzsand verwendet. Bei einem bevorzugten Ausführungsbeispiel enthält die Pulverkomponente 60% Quarzsand als inerten Füller. Die Zugabe der inerten Füllkomponente verringert die Kosten der Baustoffmischung und kann darüber hinaus das Abbindeverhalten in einer gewünschten Weise beeinflussen.

Eine bevorzugte Ausführungsform der Baustoffmischung ist dadurch gekennzeichnet, daß die Pulverkomponente ferner bis zu 10 Gew.-%, vorzugsweise 1 bis 4 Gew.-% Hüttensandmehl enthält. Eine bevorzugte Ausführungsform enthält 2,2% Hüttensandmehl. Die Zugabe von Hüttensandmehl dient der Einstellung (Verlängerung) der Verarbeitungszeit.

Bei einer vorteilhaften Weiterbildung der Erfindung enthält die Pulverkomponente ein säure- und laugenbeständiges Pigment. Eine weiße, säurebeständige Baustoffmischung enthält beispielsweise 3,1% Weißpigment. Durch Verwendung unterschiedlicher Pigmente kann eine gewünschte Farbe eingestellt werden. Bei der Verwendung der Baustoffmischung zur Verfugung gestattet dies die Anpassung der Farbe des Fugenmaterials an das zu verfugende Material.

Die Alkalisilicat-Bindemittelkomponente ist vorzugsweise eine Alkalisilicatlösung. Die Alkalisilicatlösung wird der Pulverkomponente unmittelbar vor der Anwendung in einem Anteil von 5 bis 30 Gew.-%, vorzugsweise 10 bis 20 Gew.-% zugegeben und mit der Pulverkomponente intensiv vermischt. Als Alkalisilicatlösung eignet sich insbesondere Kaliwasserglaslösung mit einem Molverhältnis SiO₂:K₂O von kleiner als 1,5. Kaliwasserglaslösung ist dünnflüssiger als beispielsweise Natriumwasserglaslösung und deshalb besser für die Herstellung der Baustoffmischung geeignet.

Bei einem alternativen Ausführungsbeispiel kann die Baustoffmischung auch eine pulverförmige feste Alkalisilicat-Bindemittelkomponente enthalten. Diese kann der Pulverkomponente bereits vorab zugemischt sein. Bei der Verwendung zur Beschichtung oder zum Verfugen braucht dann der so vorgefertigten Baustoffmischung nur noch Wasser zugegeben zu werden. Dies vereinfacht die Verarbeitung erheblich. Bei diesem Ausführungsbeispiel enthält die Baustoffmischung vorzugsweise ein Anteil von 5 bis 10 Gew.-% der pulverförmigen Alkalisilicat-Bindemittelkomponente, wobei der verbleibende Anteil auf die Pulverkomponente entfällt.

Die erfindungsgemäße Baustoffmischung wird beispielsweise zur Beschichtung eines mineralischen und/oder metallischen Untergrunds oder zur Verfugung verwendet. Bei einer Ausführungsform wird zunächst die Alkalisilicatlösung mit der Pulverkomponente durchmischt und anschließend die Mischung auf den Untergrund durch Aufstreichen, Aufrollen oder Aufspritzen aufgebracht. Das Gemisch läßt sich sowohl von Hand als auch im Dichtstromspritzverfahren mit allen gängigen Schnecken- und Mehrkolbenmaschinen verarbeiten. Für die Beschichtung wird die Alkalisilicatlösung, vorzugsweise Kaliumwasserglaslösung, in einer Menge von vorzugsweise 12 Gew.-% zugegeben.

Bei einer alternativen Ausführungsform des Verfahrens zur Beschichtung eines mineralischen und/oder metallischen Untergrunds enthält die Baustoffmischung bereits die pulverförmige Alkalisilicat-Bindemittelkomponente. Die Baustoffmischung wird dann vor ihrer Verwendung mit etwa 5 bis 15 Gew.-%, vorzugsweise 10 Gew.-% Wasser vermischt.

Insbesondere bei der Verwendung eines hellen calcinierten Bauxits oder Hydrargillits in der Baustoffmischung eignet sich die Mischung hervorragend als Ausgangsbasis für ein einfärbbares und einschlämmbares Fugenmaterial. Bei dieser Verwendung enthält die Baustoffmischung vorzugsweise 18 bis 20 Gew.-% einer Kaliwasserglaslösung.

Vorteilhafte Weiterbildungen der Erfindung sind in Unteransprüchen gekennzeichnet.

Im folgenden werden einige Ausführungsbeispiele der erfindungsgemäßen Baustoffmischung angegeben.

### Beispiel 1: Weißer säurebeständiger Fugmörtel

| |
|---|
| 37,0% Quarzsand H32 |
| 23,0% Quarzsand F 36 |
| 28,7% calcinierter Bauxit |
| 6,0% Silicastaub |
| 2,2% Hüttensandmehl |
| 3,1% Weißpigment (säure- und laugenbeständig) |
| = 100,0% Pulverkomponente. Wird gemischt mit 18-20 % Kaliwasserglaslösung. |

### Beispiel 2: Farbiger Fugenmörtel

| |
|---|
| 60% Quarzsand |
| 30% calciniertes Hydrargillit |
| 7% Silicastaub |
| 3% Farbpigment |
| = 100% Pulverkomponente. Wird gemischt mit 18-20% Kaliwasserglaslösung. |

Sofern ein ziegelrot eingefärbter Fugmörtel gewünscht wird, kann anstelle des calcinierten Hydrargillits auch kalziumfreier, calcinierter Roh-Bauxit oder Laterit verwendet werden, wobei das Farbpigment entfallen kann.

### Beispiel 3: Weiße Beschichtungsmasse

| |
|---|
| 60% Quarzsand |
| 30% calciniertes Bauxit |
| 6% Silicastaub |
| 1% Neopentylglykol |
| 3% Farbpigmente |
| = 100% Pulverkomponente. Wird gemischt mit 12% Kaliwasserglaslösung. |

Das Neopentylglykol ist ein hydrophiler Zusatz, der der Wasserrückhaltung im Gemisch dient. Alternativ können bis zu 8 Gew.-% eines ein- oder mehrwertigen Alkohols oder eines niedermolekularen Amins zugegeben werden. Bevorzugt sind 1-2 Gew.-% eines Glykols.

## Patentansprüche

1. Baustoffmischung mit einer Alkalisilicat-Bindemittelkomponente und einer mit dieser unter Anwesenheit von Wasser abbindenden Pulverkomponente,
wobei die Pulverkomponente eine Mischung aus wenigstens einer aktivierten Siliciumdioxidkomponente und wenigstens einer aktivierten Aluminiumoxykomponente ist, und
wobei die Baustoffmischung höchstens 3 Gew.-% Kalziumoxidverbindungen enthält.

2. Baustoffmischung nach Anspruch 1, dadurch gekennzeichnet, daß die wenigstens eine aktivierte Aluminiumoxykomponente ein Aluminiumoxid, ein Aluminiumhydroxid und/oder ein Aluminiumsilicat umfaßt.

3. Baustoffmischung nach Anspruch 2, dadurch gekennzeichnet, daß die wenigstens eine aktivierte Aluminiumoxykomponente wenigstens 60 Gew.-% Aluminiumoxide und/oder Aluminiumhydroxide enthält.

4. Baustoffmischung nach Anspruch 3, dadurch gekennzeichnet, daß die aktivierte Aluminiumoxykomponente ein calciniertes Bauxit oder Hydrargillit ist.

5. Baustoffmischung nach einem der Ansprüche 1 bis 4, dadurch gekennzeichnet, daß die Siliciumdioxidkomponente wenigstens ein Stoff aus einer pyrogene Kieselsäure, Fällungskieselsäure und Silicastaub enthaltenen Gruppe aufweist.

6. Baustoffmischung nach einem der Ansprüche 1 bis 5, dadurch gekennzeichnet, daß die Pulverkomponente 5 bis 97 Gew.-%, vorzugsweise 20 bis 40 Gew.-% der Aluminiumoxykomponente und 2 bis 15 Gew.-%, vorzugsweise 4 bis 8 Gew.-% der Siliciumdioxidkomponente enthält.

7. Baustoffmischung nach Anspruch 3 oder 4, dadurch gekennzeichnet, daß die Pulverkomponente 5 bis 97 Gew.-%, vorzugsweise 20 bis 40 Gew.-% Aluminiumoxykomponenten enthält.

8. Baustoffmischung nach Anspruch 4, dadurch gekennzeichnet, daß die Pulverkomponente 5 bis 97 Gew.-%, vorzugsweise 20 bis 40 Gew.-% des calcinierten Bauxits oder Hydrargillits enthält.

9. Baustoffmischung nach Anspruch 5, dadurch gekennzeichnet, daß die Pulverkomponente 2 bis 15 Gew.-%, vorzugsweise 4 bis 8 Gew.-% von Stoffen der pyrogene Kieselsäure, Fällungskieselsäure und Silicastaub enthaltenden Gruppe enthält.

10. Baustoffmischung nach einem der Ansprüche 1 bis 9, dadurch gekennzeichnet, daß die Pulverkomponente ferner eine inerte Füllkomponente enthält.

11. Baustoffmischung nach Anspruch 10, dadurch gekennzeichnet, daß die Pulverkomponete die inerte Füllkomponente in einem Anteil bis zu 70 Gew.-% enthält.

12. Baustoffmischung nach Anspruch 10 oder 11, dadurch gekennzeichnet, daß die inerte Füllkomponente im wesentlichen aus Quarzsand besteht.

13. Baustoffmischung nach einem der Ansprüche 1 bis 12, dadurch gekennzeichnet, daß die Pulverkomponente ferner bis zu 10 Gew.-%, vorzugsweise 1 bis 4 Gew.-%, insbesondere etwa 2 Gew.-% Hüttensandmehl enthält.

14. Baustoffmischung nach einem der Ansprüche 1 bis 13, dadurch gekennzeichnet, daß die Pulverkomponente ferner ein säure- und laugenbeständiges Pigment enthält.

15. Baustoffmischung nach einem der Ansprüche 1 bis 14, dadurch gekennzeichnet, daß die Alkalisilicat-Bindemittelkomponente eine Alkalisilicatlösung ist.

16. Baustoffmischung nach Anspruch 15, dadurch gekennzeichnet, daß die Alkalisilicatlösung eine Kaliwasserglaslösung mit einem Molverhältnis SᵢO₂ : K₂O kleiner 1,5 ist.

17. Baustoffmischung nach Anspruch 15 oder 16, dadurch gekennzeichnet, daß sie einen Anteil von 5 bis 30 Gew.-%, vorzugsweise 10 bis 20 Gew.-% der Alkalisilicatlösung enthält, wobei der verbleibende Anteil auf die Pulverkomponente entfällt.

18. Baustoffmischung nach Anspruch 17 zur Beschichtung mineralischer und/oder metallischer Untergründe, dadurch gekennzeichnet, daß sie 10 bis 15% Gew.-%, vorzugsweise 12 Gew.-% der Alkalisilicatlösung enthält.

19. Baustoffmischung nach Anspruch 17 zur Verwendung als Verfugungsmaterial, dadurch gekennzeichnet, daß sie 15 bis 25 Gew.-%, vorzugsweise 18 bis 20 Gew.-% der Alkalisilicatlösung enthält.

20. Baustoffmischung nach einem der Ansprüche 1 bis 14, dadurch gekennzeichnet, daß eine pulverförmige Alkalisilicat-Bindemittelkomponente mit der Pulverkomponente gemischt ist.

21. Baustoffmischung nach Anspruch 20, gekennzeichnet durch einen Anteil von 5 bis 10 Gew.-% der pulverförmigen Alkalisilicat-Bindemittelkomponente, wobei der verbleibende Anteil auf die Pulverkomponente entfällt.

22. Verfahren zur Beschichtung eines mineralischen und/oder metallischen Untergrunds,
wobei eine Baustoffmischung nach einem der Ansprüche 15 bis 19 verwendet wird, und
wobei die Alkalisilicatlösung mit der Pulverkomponente erst unmittelbar vor dem Auftragen der Baustoffmischung gemischt wird.

23. Verfahren nach Anspruch 22, dadurch gekennzeichnet, daß das Gemisch durch Aufstreichen, Aufrollen, Aufspritzen, Aufspachteln oder Aufziehen mit Glätter auf den Untergrund aufgebracht wird.

24. Verfahren nach Anspruch 22, dadurch gekennzeichnet, daß das Gemisch im Dichtstromspritzverfahren mit Hilfe von Schnecken- oder Mehrkolbenmaschinen aufgebracht wird.

25. Verfahren zur Beschichtung eines mineralischen und/oder metallischen Untergrundes,
wobei eine Baustoffmischung nach Anspruch 20 oder 21 verwendet wird, und
wobei die Baustoffmischung vor ihrer Verwendung mit etwa 10 bis 15 Gew.-% Wasser vermischt und anschließend auf den Untergrund aufgebracht wird.

26. Verwendung einer Baustoffmischung nach einem der Ansprüche 1 bis 17 oder 19 bis 21 als Fugenmasse oder Fugenfüller.

27. Verwendung einer Baustoffmischung nach Anspruch 4 als Fugenmasse oder Fugenfüller, wobei die Baustoffmischung durch Zugabe säure- und laugenbeständiger Pigmente gefärbt wird.
